(19) Europäisches Patentamt
European Patent Office
Office européen des brevets

(11) **EP 3 438 920 A1**

(12) **EUROPEAN PATENT APPLICATION**

(43) Date of publication:
**06.02.2019 Bulletin 2019/06**

(51) Int Cl.:
***G06T 3/40*** *(2006.01)*

(21) Application number: **17306022.9**

(22) Date of filing: **31.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Institut Pasteur
75015 Paris (FR)**

(72) Inventors:
• ZIMMER, Christophe
  **91370 VERRIERES LE BUISSON (FR)**
• OUYANG, Wei
  **75014 PARIS (FR)**

(74) Representative: **Santarelli
49, avenue des Champs-Elysées
75008 Paris (FR)**

(54) **METHOD, DEVICE, AND COMPUTER PROGRAM FOR IMPROVING THE RECONSTRUCTION OF DENSE SUPER-RESOLUTION IMAGES FROM DIFFRACTION-LIMITED IMAGES ACQUIRED BY SINGLE MOLECULE LOCALIZATION MICROSCOPY**

(57)    The invention relates to reconstructing a synthetic dense super-resolution image from a sequence of diffraction-limited images acquired by single molecule localization microscopy. After having obtained such a sequence of diffraction-limited images, a sparse localization image is reconstructed from the obtained sequence of diffraction-limited images according to single molecule localization microscopy image processing. The reconstructed sparse localization image is input to an artificial neural network and a synthetic dense super-resolution image is obtained from the artificial neural network, the latter being trained with training data comprising pairs of sparse localization images and corresponding dense super-resolution images, as a function of a training objective function comparing dense super-resolution images and corresponding outputs of the artificial neural network.

Fig. 4

**Description**

FIELD OF THE INVENTION

The invention generally relates to the field of microscopy and image processing. More particularly, the invention concerns a method, a device, and a computer program for improving the reconstruction of dense super-resolution images, i.e. images having resolution beyond the diffraction limit, from diffraction-limited images acquired by single molecule localization microscopy, making it possible to decrease the acquisition time of the diffraction-limited images used for reconstructing the dense super-resolution images, without significantly affecting the quality and the resolution of the reconstructed images.

BACKGROUND OF THE INVENTION

Fluorescence microscopy methods that overcome the diffraction limit of resolution (about 200 to 300 nm) allow imaging of biological structures with molecular specificity close to the molecular scale. Among super-resolution microscopy approaches, those based on single molecule localization, such as PALM (photo-activated localization microscopy), STORM (stochastic optical reconstruction microscopy), or PAINT (point accumulation for imaging in nanoscale topography) are particularly attractive owing to their extreme spatial resolution and ease of implementation.

In these methods of single molecule localization microscopy (SMLM), small random subsets of fluorophores are imaged in many consecutive diffraction-limited images, computationally detected and localized with high precision, and the combined fluorophore localizations are used to generate a dense super-resolution image (or dense image) defined for example as a 2D histogram of independent localizations $(x_i, y_i)$.

In practice, the number of diffraction-limited images (also referred to as raw images) underlying a single dense super-resolution image, denoted $K$, is typically comprised between 1 000 and 100 000. This constraint follows from two conditions that must be met simultaneously to ensure high spatial resolution:

- a low number of activated fluorophores per diffraction-limited image, denoted $\rho$, to avoid overlaps between diffraction limited spots and allow the precise localization of individual molecules. The value of $\rho$ is typically comprised between 10 and 100 (this number depends on the size and resolution of the sensor, it needs to be small enough so that diffraction limited spots from activated fluorophores do not overlap or overlap only rarely), and
- a large number of independent fluorophore localizations, i.e. localizations corresponding to distinct fluorophores, denoted $N$ (with $N = K \times \rho$), to ensure sufficiently dense sampling of the underlying biological structures.

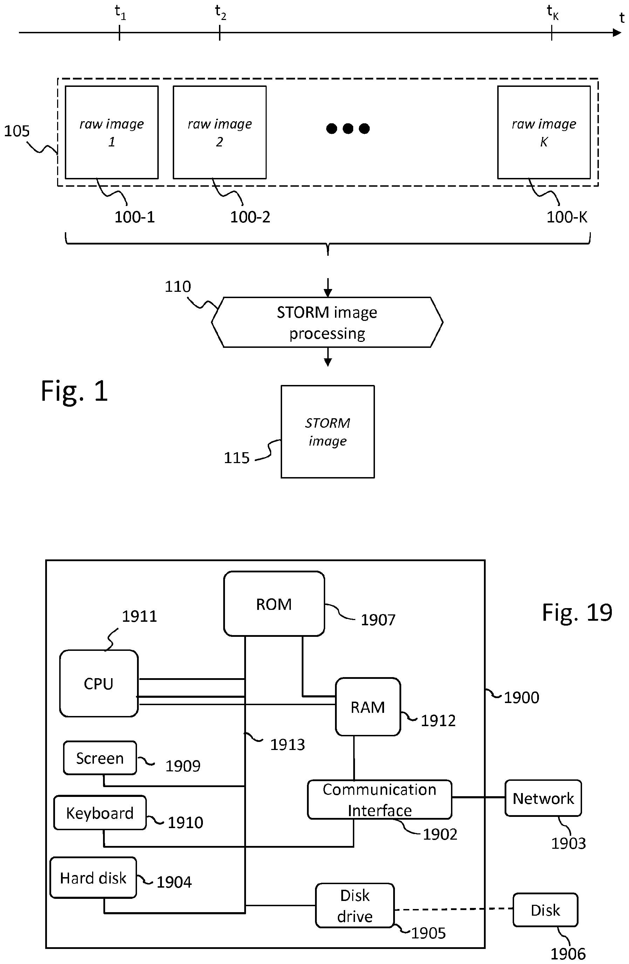

**Figure 1** illustrates the reconstruction of a dense super-resolution image from diffraction-limited images each comprising a low number of active fluorophore appearing as diffraction-limited fluorescent spots, taking as an example the STORM image processing.

As illustrated, images 100-1 to 100-K of set 105 comprising $K$ diffraction-limited images (or raw images), taken at time $t_1$ to $t_k$, respectively, are used to reconstruct dense super-resolution image 115 according to STORM image processing (dense super-resolution image 115 may be called STORM image), i.e. fluorophore detection, fluorophore localization with sub-pixel and sub-diffraction precision and displaying a 2D histogram of independent localizations $(x_i, y_i)$, denoted 110.

For the sake of illustration, the mean number $n$ of fluorophore appearing as diffraction-limited fluorescent spots per raw image may be approximately equal to 15 and the number $K$ of raw images used to reconstruct one STORM image may be equal to 80 000.

SMLM image acquisition and processing is described, in particular, in Betzig, E. et al., "Imaging intracellular fluorescent proteins at nanometer resolution", Science (80-.), 313, 1642-1645 (2006). STORM image acquisition and processing is described, in particular, in Rust, M. J., Bates, M. & Zhuang, X. "Sub-diffraction-limit imaging by stochastic optical reconstruction microscopy (STORM)", Nat Methods 3, 793-795 (2006).

The resolution limit due to sampling has been defined in one early study as twice the mean distance between closest independent localizations. To achieve a given resolution denoted $R$, the Nyquist criterion yields a minimum number of fluorophore localizations denoted $N_{Nyq}(R)$. However, a recent reanalysis and comparisons with electron microscopy data concluded that at least five times more molecular localizations $(N_{5xNyq}(R) = 5xN_{Nyq}(R))$ are in fact needed.

The large number of images $(K = N / \rho)$ implied by the two above mentioned conditions makes single molecule localization microscopy inherently inefficient and slow, thereby limiting its potential for high-throughput imaging, where many fields of view (FOVs) of a field of study are to be imaged, and for imaging live cell dynamics. As a result, most single molecule localization microscopy studies have been limited to analyzing a small number of cells (typically less than ten) and to live cell imaging of objects moving slowly compared to the acquisition time.

Multiple approaches have been explored to accelerate localization microscopy.

Using bright dyes with rapid switching kinetics, high power lasers and fast cameras makes it possible to minimize exposure time without losing signal to noise ratio, but reaching sub-millisecond exposure remains challenging, and intense irradiation exacerbates phototoxicity and photobleaching in live cell imaging reducing the observation period.

Another approach is to increase the number p of active fluorophore appearing as diffraction-limited fluorescent spots per image, making it possible to reduce the number $K$ of images without reducing the number $N$ of independent fluorophore localizations, and to apply localization algorithms that can handle overlapping fluorescent spots. However, these overlaps necessarily compromise detection precision of fluorophore localizations, implying that any gain in temporal resolution comes at the cost of degraded spatial resolution.

Accordingly, there is a need to improve the reconstruction of dense super-resolution images from raw images obtained by single molecule localization microscopy to decrease the overall process time and in particular the time needed for acquiring the raw images that are used to reconstruct the dense super-resolution images.

## SUMMARY OF THE INVENTION

Faced with these constraints and limitations, the inventors provide a method, a device, and a computer program for improving the reconstruction of dense super-resolution images from diffraction-limited images acquired by single molecule localization microscopy.

It is a broad object of the invention to remedy the shortcomings of the prior art as described above.

According to a first aspect of the invention there is provided a computer method for reconstructing at least one synthetic dense super-resolution image from a sequence of diffraction-limited images acquired by single molecule localization microscopy, the method comprising the steps of:

- obtaining a sequence of diffraction-limited images acquired by single molecule localization microscopy;
- reconstructing a sparse localization image from the obtained sequence of diffraction-limited images according to single molecule localization microscopy image processing;
- inputting the reconstructed sparse localization image to an artificial neural network, and
- obtaining a synthetic dense super-resolution image from the artificial neural network,

wherein the artificial neural network has been trained with training data comprising pairs of sparse localization images and corresponding dense super-resolution images, as a function of a training objective function comparing dense super-resolution images and corresponding outputs of the artificial neural network.

In particular, the claimed method makes it possible to reconstruct synthetic dense super-resolution images, for example synthetic dense SMLM images, of about the same quality as dense super-resolution images, for example dense SMLM images, reconstructed according to standard algorithms, for example dense SMLM images reconstructed according to STORM image processing, with a much smaller number of raw images leading to a much shorter period of acquisition. The reconstructed sparse localization image may be a reconstructed sparse SMLM image.

According to embodiments, the single molecule localization microscopy is photo-activated localization microscopy (PALM), stochastic optical reconstruction microscopy (STORM), or point accumulation for imaging in nanoscale topography (PAI NT).

According to embodiments, the obtained sequence of diffraction-limited images comprises less than 300 diffraction-limited images, each of the diffraction-limited images comprising between 1 to 100 fluorophore localizations.

According to embodiments, at least one of the dense super-resolution images used to train the artificial neural network is built from a sequence of at least 30,000 diffraction-limited images acquired by single molecule localization microscopy.

According to embodiments, the diffraction-limited images of the obtained sequence correspond to a first field of view of a field of study, the steps of obtaining a sequence of diffraction-limited images, reconstructing a sparse localization image from the obtained sequence of diffraction-limited images, inputting the reconstructed sparse localization image to the artificial neural network, and obtaining a synthetic dense super-resolution image from the artificial neural network being repeated for at least one second field of view of the field of study, the first and the second fields of view being different.

According to embodiments, the first field of view and the second field of view are contiguous within the field of study, the method further comprising a step of creating a resulting image by stitching synthetic dense super-resolution images obtained from the artificial neural network.

Accordingly, the method of the invention enables super-resolution imaging of large field of study comprising many fields of view, in particular super-resolution imaging of hundreds of cells on time scales commonly used to image just a few cells.

According to embodiments, the diffraction-limited images of the obtained sequence correspond to a predetermined field of view, the steps of obtaining a sequence of diffraction-limited images, reconstructing a sparse localization image from the obtained sequence of diffraction-limited images, inputting the reconstructed sparse localization image to the artificial neural network, and obtaining a synthetic dense super-resolution image from the artificial neural network being repeated periodically for the same field of view.

Accordingly, the method of the invention enables high throughput imaging facilitating dynamic super-resolution imaging, in particular dynamic super-resolution imaging in live cells, without requiring higher excitation power or suffering from additional phototoxicity and photobleaching, thereby allowing faster and longer live cell super-resolution imaging without excessive photodamage.

According to embodiments, the artificial neural network comprises an encoder network and a decoder network, the encoder network comprising a plurality of convolution layers and of down-sampling layers and the decoder network comprising a plurality of deconvolution layers and of up-sampling layers. The artificial neural network may be of the U-net type.

According to embodiments, the method further comprises a step of training the artificial neural network.

According to embodiments, the method further comprises a step of pairing sparse localization images and corresponding dense super-resolution images for training the artificial neural network. This step of pairing sparse localization images and corresponding dense super-resolution images may comprise:

- obtaining a training sequence of diffraction-limited images acquired by single molecule localization microscopy;
- reconstructing a plurality of sparse localization images from first sub-sets of the obtained training sequence of diffraction-limited images according to a single molecule localization microscopy image processing; and
- reconstructing a plurality of dense super-resolution images from second sub-sets of the obtained training sequence of diffraction-limited images according to a single molecule localization microscopy image processing, each of the second sub-sets comprising more diffraction-limited images than each of the first sub-sets.

According to embodiments, the step of pairing sparse localization images and corresponding dense super-resolution images comprises:

- initializing simulation conditions;
- simulating evolution of the simulation conditions;
- building a dense super-resolution image from a result of the simulating step; and
- building a plurality of sparse localization images from the built dense image.

Accordingly, the method of the invention makes it possible to verify the quality of the reconstructed synthetic dense super-resolution images.

According to embodiments, the method further comprises a step of building additional sparse localization images by transforming at least one sparse localization image of the plurality of sparse localization images. The step of transforming at least one sparse localization image may comprise adding noise to at least one sparse localization image, rotating at least one sparse localization image, cropping at least one sparse localization image, modifying at least one sparse localization image, modifying the intensity scale of at least one sparse localization image, shearing at least one sparse localization image, and/or applying an elastic deformation to at least one sparse localization image. This makes it possible to increase the number and the variability of the images to be used for training artificial neural network.

According to embodiments, the training objective function comprises at least one of an objective function based on the L1 norm, on the L2 norm, on dice coefficients, and on an artificial neural network of the generative adversarial network type or of the conditional generative adversarial network type.

According to a second aspect of the invention there is provided an apparatus comprising means configured for carrying out each step of the method described above. The second aspect of the present invention has advantages similar to the first above-mentioned aspect.

Since parts of the present invention can be implemented in software, parts of the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

In an embodiment, the computer code exploits graphic processing units (GPU) that allow parallel processing of large matrix data.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Further advantages of the present invention will become apparent upon examination of the drawings and detailed description. It is intended that any additional advantages be incorporated herein.

Embodiments of the invention will now be described, by way of example only, and with reference to the following drawings in which:

**Figure 1** illustrates the reconstruction of a dense super-resolution image from diffraction-limited images (or raw images) each comprising a low number of active fluorophore appearing as diffraction-limited fluorescent spots, taking as an example the STORM image processing;

**Figure 2** illustrates a first embodiment of a method for reconstructing sparse SMLM images and dense SMLM images from a set of raw images to create a training data set;

**Figure 3** illustrates schematically a first example of the architecture of a system for training an artificial neural network to be used for reconstructing synthetic dense SMLM images from raw images acquired by single molecule localization microscopy, based on the use of the L2 norm;

**Figure 4** illustrates schematically the architecture of a system for reconstructing synthetic dense SMLM images from raw images acquired by single molecule localization microscopy using an artificial neural network trained according to embodiments of the invention;

**Figure 5** illustrates an example of architecture for the artificial neural network illustrated in Figures 3 and 4;

**Figure 6** illustrates a first example of steps for creating images to be used for training the artificial neural network represented in Figure 3, according to which created images are based on experimental results;

**Figure 7** illustrates a second example of steps for creating images to be used for training the artificial neural network represented in Figure 3, according to which created images are based on simulation;

**Figure 8** illustrates schematically a second example of the architecture of a system for training an artificial neural network to be used for reconstructing synthetic dense SMLM images from raw images acquired by single molecule localization microscopy, based on cGAN/L1 loss;

**Figure 9** illustrates an example of architecture of a discriminator network used during the training phase of the artificial neural network illustrated in Figure 8;

**Figures 10a and 10b** illustrate an example of raw images acquired by single molecule localization microscopy;

**Figure 11a** illustrates an example of a sparse SMLM image reconstructed by STORM image processing from 250 raw images;

**Figure 11b** represents a zoom of a portion of the image in Figure 11 a;

**Figure 12a** illustrates an example of a dense SMLM image reconstructed by STORM image processing from 149,687 raw images;

**Figure 12b** represents a zoom of a portion of the image in Figure 12a;

**Figure 13a** illustrates an example of a synthetic dense SMLM image reconstructed according to embodiments of the invention after the artificial neural network used has been trained with the L2 loss, as described by reference to Figure 3;

**Figure 13b** represents a zoom of a portion of the image in Figure 13a;

**Figure 14a** illustrates an example of a synthetic dense SMLM image reconstructed according to embodiments of the invention after the used artificial neural network has been trained with the cGAN/L1 loss, as described by reference to Figure 8;

**Figure 14b** represents a zoom of a portion of the image in Figure 14a;

**Figure 15** illustrates the mean square error as a function of the image (frame) number or acquisition time between ANNA-STORM or STORM images and the ground truth, as defined by the dense STORM image, depending on the L2 and cGAN/L1 losses;

**Figure 16**, comprising Figures 16a to 16d, illustrates the use of embodiments of the invention to high throughput imaging of a 1.8 mm x 1.8 mm area containing many hundreds of cells;

**Figure 17**, comprising Figures 17a to 17l, illustrates the robustness of embodiments of the invention to experimental perturbations;

**Figure 18**, comprising Figures 18a to 18f, illustrates the use of embodiments of the invention to different biological structures; and

**Figure 19** is a block diagram illustrating components of a processing device in which embodiments of the invention may be at least partially implemented.

DETAILED DESCRIPTION OF EMBODIMENTS OF THE INVENTION

For the sake of illustration, the following description is based as whole on STORM image processing. However, it is to be understood that the invention applies to other methods for reconstructing dense super-resolution images from diffraction-limited images (also called raw images) acquired by single molecule localization microscopy (SMLM), for example PALM image processing and PAINT imaging. PALM image processing, STORM image processing, and PAINT image processing are generically referred to as single molecule localization microscopy imaging.

According to embodiments, the total number $N$ of independent fluorophore localizations is reduced, without increasing the number $\rho$ of activated fluorophore appearing as diffraction-limited fluorescent spots per raw image, thereby reducing the total number $K$ of acquired raw images ($K = N / \rho$), in comparison to standard single molecule localization microscopy image processing methods.

Indeed, it has been observed that it is possible to build high quality dense super-resolution images from vastly under-sampled localization microscopy data by taking advantage of the structural redundancy of most biological images.

According to embodiments, deep learning, a branch of machine learning that employs artificial neural networks (ANNs), is used to learn complex non-linear mappings between numerical inputs and outputs and thus, to build synthetic dense super-resolution images (also referred to as ANNA-SMLM images (artificial neural network accelerated SMLM images), synthetic dense SMLM images, synthetic dense images, synthetic images, or ANNA-STORM images if corresponding raw images are acquired by STORM) from raw images acquired by single molecule localization microscopy.

The invention makes it possible to reconstruct a synthetic dense SMLM image of approximately similar information content as a standard dense super-resolution image (or dense SMLM image) (with $K$ images and $N$ fluorophore localizations) from a much smaller number $k$ of raw images (k<<K) without changing the average density of localizations, $\rho$, i.e. from a much smaller number of fluorophore localizations ($n = \rho \times k << \rho \times K = N$).

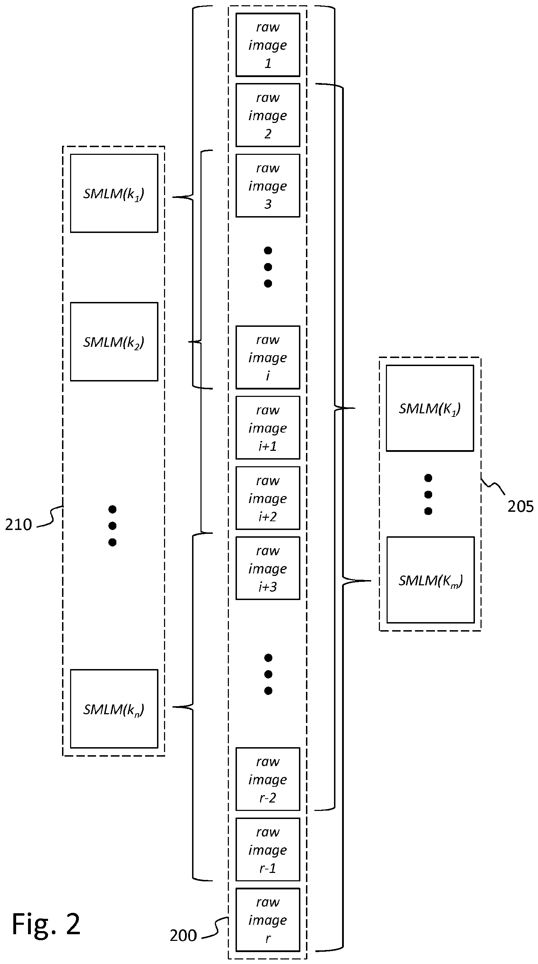

**Figure 2** illustrates a first embodiment of a method for reconstructing sparse SMLM images (also referred to as sparse images) and dense SMLM images from a set of raw images to create a training data set (or a training data subset).

As illustrated, a set 205 of dense SMLM images generically denoted $SMLM(K_i)$ is reconstructed from a set 200 of raw images acquired by single molecule localization microscopy, for example by stochastic optical reconstruction microscopy image processing. The set 205 of dense SMLM images may comprise from one to several tens of dense SMLM images. Each dense SMLM is built from a set of $K$ raw images according to a standard method, for example STORM image processing, the value $K$ being predetermined or being determined dynamically. The value $K$ is typically comprised between several thousands of raw images to several hundreds of thousands of raw images.

The set 200 of raw images advantageously comprises more than K raw images so that different dense SMLM images can be reconstructed. Alternatively, all the raw images of the set 200 are used to reconstruct one dense SMLM image.

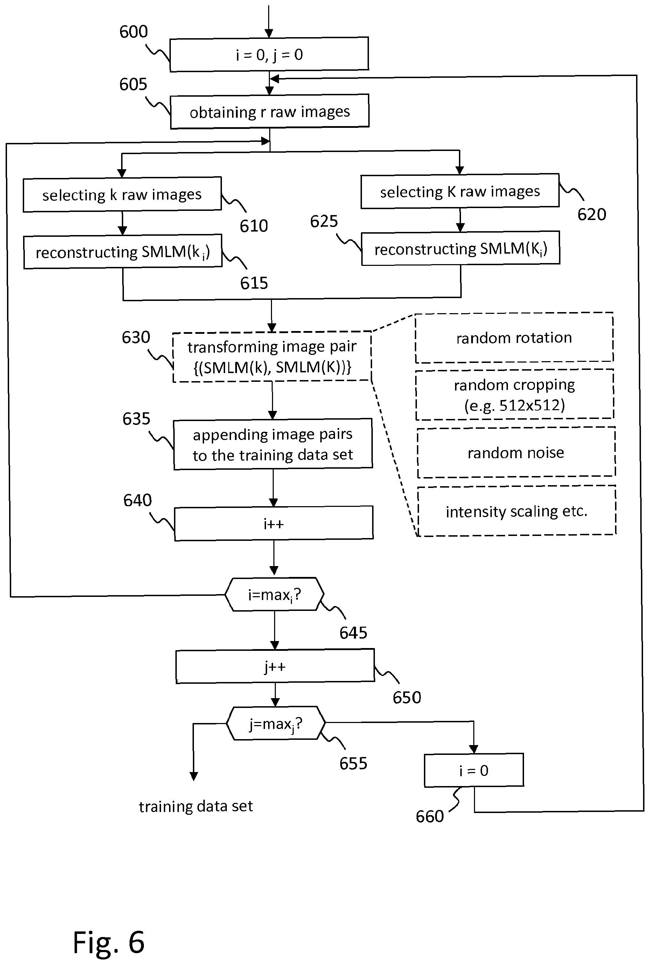

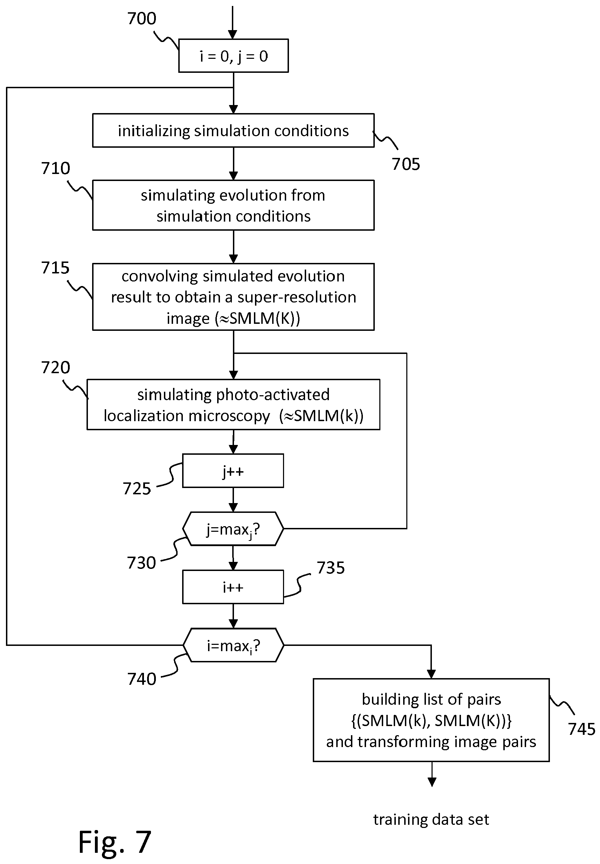

As described here after by reference to Figures 6 and 7, several sets of raw images can be used to create a training data set.

Similarly, a set 210 of sparse SMLM images generically denoted $SMLM(k_i)$ is reconstructed from the set 200 of raw images acquired by single molecule localization microscopy. The set 210 of sparse SMLM images may comprise from several hundreds to several tens of thousands of images, for example 20,000. Each sparse SMLM image is reconstructed from a set of $k$ raw images ($k$ being very small in comparison with K ($k << K$), for example 100 times smaller) according to a standard method, for example STORM image processing, the value $k$ being predetermined or being determined dynamically. The method used to reconstruct the sparse SMLM images is preferably the same as the one used for reconstructing each of the dense SMLM images. The value $k$ is typically comprised between several tens of raw images to several hundreds of raw images.

As described above, the STORM image processing may be based, for example, on the following steps as a whole:

- a detection step that determines the number and approximate location of fluorescent spots at the raw image pixel level. Typically, this is done by a thresholding of some kind of smoothed version of the raw image and identification of connected components;

- a localization step that computes the position of each fluorophore more precisely, with subpixel and sub-diffraction precision. This is often done by fitting a model of the point spread function to the image, for example using maximum likelihood estimation (MLE); and

- a rendering step for reconstructing a dense STORM image from a list of coordinates (x,y) resulting from the two previous steps. Typically, this rendering is done by displaying a 2D histogram of localizations, using a grid of bins (pixels) that are smaller than the expected resolution (typically something like 10 nm or 20 nm).

It may be used for reconstructing both sparse SMLM images and dense SMLM images.

According to embodiments, each sparse SMLM image *SMLM(k$_j$)* is paired with each dense SMLM image *SMLM(K$_j$),* for a set of raw images, to create training data {(*SMLM(k$_j$), SMLM(K$_j$)*)}.

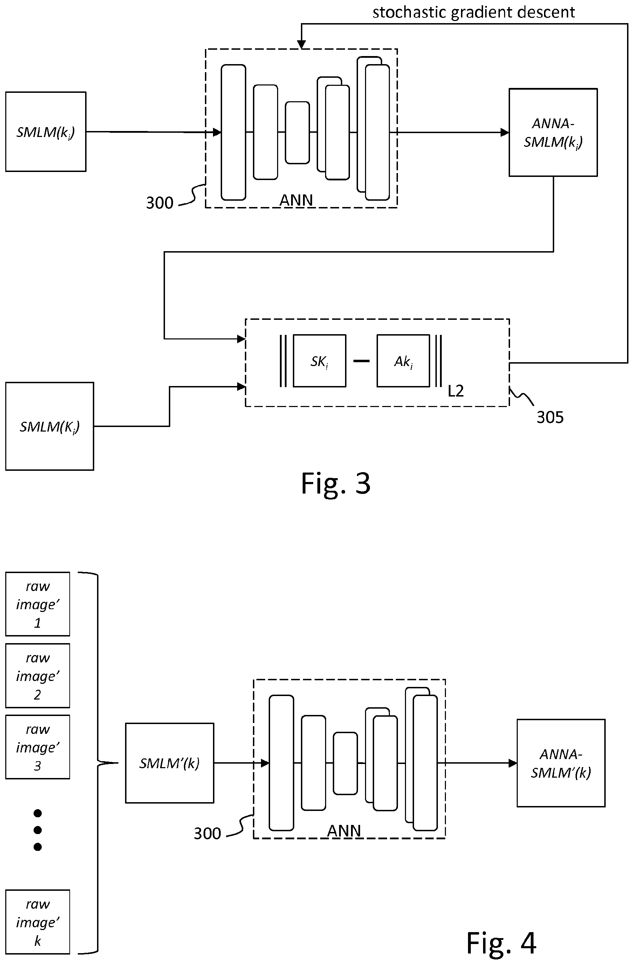

**Figure 3** illustrates schematically a first example of the architecture of a system for training an artificial neural network to be used for reconstructing synthetic dense SMLM images from raw images acquired by single molecule localization microscopy, based on the use of the L2 norm.

As illustrated, sparse SMLM images *SMLM(k)* and dense SMLM images *SMLM(K)* as determined for example according to the method described by reference to Figure 2, 6, or 7, are used to train artificial neural network 300.

Sparse SMLM images *SMLM(k)* are used as inputs of artificial neural network 300 that may be considered as a generator network that outputs synthetic dense SMLM images denoted ANNA-SMLM, while dense SMLM images *SMLM(K),* corresponding to the desired outputs, are compared with the outputs of artificial neural network 300, to adapt the parameters (typically weights and biases) of the latter accordingly, for example using a stochastic gradient descent algorithm to minimize iteratively a loss error that measures how well real outputs match desired outputs. Such steps of adapting parameters of artificial neural network 300 are called the learning or training phase.

According to embodiments, each pair of the training set of data is used at least once during the training phase.

For example, after *SMLM(k$_i$)* has been input into artificial neural network 300, the result, denoted *ANNA-SMLM(k$_i$)* (Ak$_i$ in short), is compared with the corresponding desired result *SMLM(K$_i$)* (Sk$_i$ in short) to compute an error that is used to correct the parameters of artificial neural network 300.

The error between the output of artificial neural network 300 and the corresponding desired output is computed in module 305. According to the embodiment illustrated in Figure 3, the parameters of artificial neural network 300 are adjusted according to the L2 loss that measures the mean square error (L2 norm) between an obtained result (Ak$_i$) and the corresponding desired result (Sk$_i$).

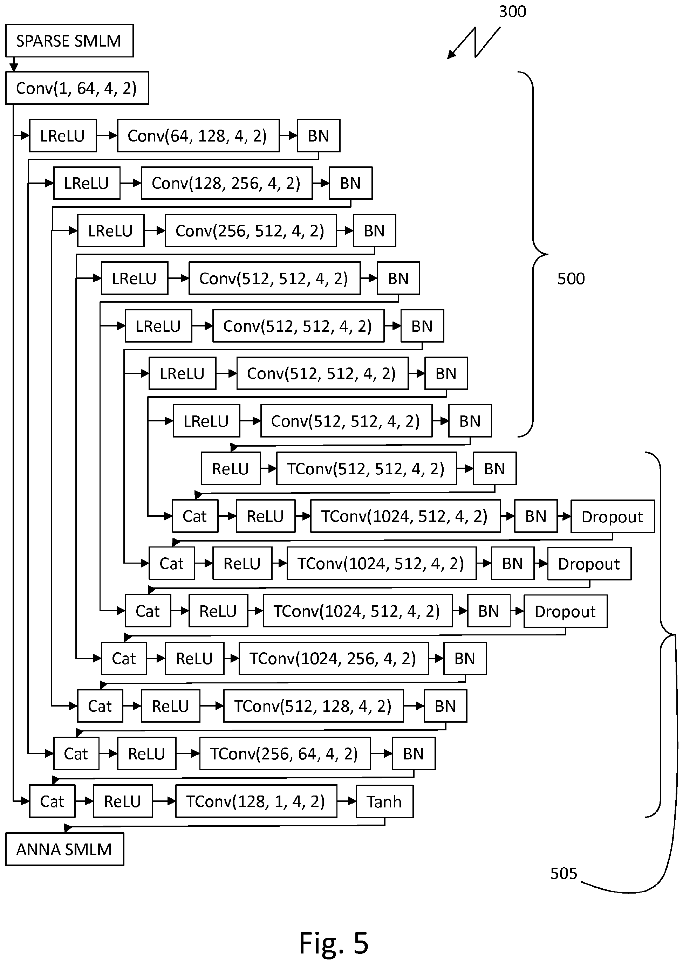

As described hereinafter by reference to Figure 5, artificial neural network 300 may be of the U-net type, for example a U-net containing 16 convolutional layers and about 55 million parameters. U-nets are special types of convolutional neural networks consisting as a whole of a 'down-sampling' (encoder) network connected to an 'up-sampling' (decoder) network, which contain layer-skipping connections between encoder and decoder feature maps of equal size. Layer-skipping connections enable accurate, pixel-wise mappings for tasks that require preservation of local information, such as image restoration, for example segmentation or inpainting.

Artificial neural networks of the U-net type are described, for example, in the article entitled "U-net: Convolutional networks for biomedical image segmentation", Ronneberger, O., Fischer, P. & Brox, T., Medical Image Computing and Computer-Assisted Intervention - MICCAI 2015. Lecture Notes in Computer Science, 9351, 234-241 (Springer International Publishing, 2015).

**Figure 4** illustrates schematically the architecture of a system for reconstructing synthetic dense SMLM images from raw images acquired by single molecule localization microscopy using an artificial neural network trained according to embodiments of the invention.

As illustrated, a sparse SMLM image *SMLM'(k)* is obtained from a set of *k* raw images, denoted *raw image' 1* to *raw image' k,* acquired by single molecule localization microscopy. It is used as input to artificial neural network 300 that outputs a corresponding synthetic dense SMLM image denoted *ANNA-SMLM'(k).*

As described above, sparse SMLM image *SMLM'(k)* is preferably obtained from the set of raw images according to the same image processing method as the one used for obtaining sparse SMLM images to create the training data set, for example the STORM image processing.

**Figure 5** illustrates an example of architecture for the artificial neural network illustrated in Figures 3 and 4.

According to this example, artificial neural network 300 comprises an encoder network and a decoder network with skip connections. It is a U-net with 16 convolutional layers and 54,408,832 parameters. Its inputs and outputs are image patches containing *(256m) x (256m)* pixels, where m is an integer. The input is a sparse SMLM image (denoted SPARSE SMLM), for example a sparse STORM image, and the output is a synthetic dense SMLM image of the same size (denoted ANNA SMLM).

The encoder network contains multiple convolutional layers, alternating with down-sampling layers (resulting from the use of a convolution layer with a stride set to two), stacked on top of each other, resulting in feature maps of halving size and doubling number. The decoder network contains multiple convolutional layers(for applying a transposed convolution also called a deconvolution) alternating with up-sampling layers (resulting again from the use of a transpose convolution layer with a stride sets to two), that result in feature maps of doubling size and halving number. The U-net is approximately symmetric and the last layer of the decoder network produces an output image of identical size as the input image fed to the encoder network.

According to such an embodiment, convolution layers with a stride of two (instead of max pooling layers) are used (unlike the original U-net). Moreover, rectified linear unit layers are preferably replaced by leaky rectified linear unit layers in the encoder.

As described above, U-nets contain direct connections between feature maps located symmetrically in the encoder and decoder. These feature maps, which have identical size, are concatenated in the corresponding layers of the decoder. The skip-layer connections allow the network to combine local, pixel-wise information, with the larger context information that is propagated through consecutive convolutional layers.

As illustrated in the example of Figure 5, encoder 500 comprises 8 convolutional layers, each of the layers carrying out a 2D convolution denoted *Conv(a, b, c, d)* where,

- *a* is the input feature map number, for example the value 1 may indicate that the input is encoded on a predetermined number of bits on one channel;
- *b* is the output feature map number, for example the value 64 may indicate that the output is encoded on a predetermined number of bits on 64 channels;
- *c* corresponds to the kernel size, for example the value 4 may indicate that a 4x4 convolution kernel is used. The convolution kernel is adjusted during the learning phase; and
- *d* defines the stride or moving step of the convolution kernel, for example the value 2 reduces the output size by half.

The second to the eighth layers comprise a leaky rectified linear unit denoted LReLU, which applies the following activation function, to the output of the previous layer:

$$x \rightarrow \max(x, 0) + \min(\varepsilon x, 0) \text{ with for example } \varepsilon = 0.2$$

As illustrated, a batch normalization denoted BN is preferably applied to the output of the convolution for each of the second to the eighth layers to normalize the data.

Likewise, decoder 505 comprises 8 convolutional layers, each of the layers carrying out a 2D deconvolution or transposed convolution denoted *TConv(a, b, c, d)* where the meaning of *a, b, c,* and *d* is the same as that of the convolution described by reference to the convolution layers of the encoder.

As illustrated, the data to be processed in each of the deconvolution units are previously processed in a rectified linear unit denoted ReLU for applying the following function:

$$x \rightarrow \max(x, 0)$$

Regarding the first layer of decoder 505, the input of the rectified linear unit corresponds to the output of the last layer of the encoder. Regarding the other layers of decoder 505, the input of the rectified linear units corresponds to the output of the previous layer of the decoder that is concatenated with the output of a symmetrical layer of the encoder (the output of the first layer of the decoder being concatenated with the output of the second last layer of the encoder, the output of the second layer of the decoder being concatenated with the output of the third last layer of the encoder, and so on as illustrated in Figure 5) in a concatenation unit denoted Cat.

A batch normalization (BN) is preferably applied to the output of each of the deconvolution units, except for that of the last layer, to normalize the data and a dropout layer (denoted Dropout) having, for example, a dropout probability equal, for example, to 0.5, is used at the output of the batch normalization of the second, third, and fourth layers of the decoder to prevent the network from overfitting and improving its performance on new data.

The output of the deconvolution unit of the last layer enters a hyperbolic tangent unit denoted Tanh to obtain the output of the U-net.

According to the example illustrated in Figure 3, training of artificial neural network 300 is based on the mean square error between an obtained result and the corresponding desired result.

For the sake of clarity in the given formulae, a sparse SMLM input image is denoted *S*, the corresponding dense SMLM image (e.g. a dense STORM image), i.e. the desired output (or target) of artificial neural network 300 is denoted *T*, and the real output of artificial neural network 300, i.e. the synthetic dense SMLM image, is denoted $A = \mathcal{F}(S)$, where $\mathcal{F}$ designates artificial neural network 300. Therefore, images *S*, *T* and *A* correspond to images *SMLM(k), SMLM(K),* and ANNA-*SMLM(k)*, respectively.

Use of the mean square error (MSE) between an obtained result and the corresponding desired result, often used for training artificial neural networks, penalizes the MSE between network output and target:

$$\mathcal{L}_{L2}(\mathcal{F}) = \mathbb{E}_{(S,T) \sim p_{\text{data}}(S,T)} \|A - T\|_{L2} = \mathbb{E}_{(S,T) \sim p_{\text{data}}(S,T)} \|\mathcal{F}(S) - T\|_{L2}$$

where

$\mathbb{E}$ denotes expectation;

$p_{\text{data}}(S, T)$ is the joint probability density of pairs of sparse and super-resolution images from the training data set; and

$\|A - T\|_{L2}$ is the L2 norm, i.e. the root mean square error between images **A** and **T** :

$$\|A - T\|_{L2} = \left( \sum \sum_{i,j} \big( A(i,j) - T(i,j) \big)^2 \right)^{1/2}$$

Artificial neural network 300 is trained to minimize this loss function:

$$\mathcal{F}^* = argmin_{\mathcal{F}} \mathcal{L}_{L2}(\mathcal{F})$$

According to embodiments, artificial neural network 300 is trained end-to-end using stochastic gradient descent (SGD), for example as described in the article entitled "A method for stochastic optimization", Kingma, D.P. & Ba, J. Adam, 2014, and a mini-batch size of 5 with a number of iterations (backpropagation steps) ranging from 80,000 to 120,000.

**Figure 6** illustrates a first example of steps for creating images to be used for training artificial neural network 300 of Figure 3, according to which created images are based on experimental results.

A first step (step 600) aims at initializing indexes $i$ and $j$ to zero. Index $i$ is associated with pairs of sparse SMLM images *SMLM(k)* and dense SMLM images *SMLM(K)* and index j is associated with the sets of raw images used to reconstruct sparse and dense SMLM images.

Next, a set of $r$ raw images is obtained (step 605), $r$ being chosen large enough to make it possible to reconstruct high quality dense SMLM images (e.g. $r$ being chosen from 10,000 to 200,000 for STORM imaging), i.e. to make it possible to choose $k$ and $K$ so that $r \geq K >> k$. These raw images may be acquired directly by single molecule localization microscopy or from a memory where raw images acquired by single molecule localization microscopy have been stored.

Next, a number $k$ of raw images is selected from the set of $r$ raw images, the $k$ raw images being preferably consecutive raw images (step 610), and a sparse SMLM image *SMLM(k_i)* is reconstructed from the $k$ selected raw images (step 615), for example according to STORM image processing.

In parallel, simultaneously or not, a number $K$ of raw images is selected from the set of $r$ raw images, the $K$ raw images being preferably consecutive raw images (step 620), and a dense SMLM image *SMLM(K_i)* is reconstructed from the $K$ selected raw images (step 625), for example according to STORM image processing.

Next, a pair is formed from the reconstructed sparse SMLM image *SMLM(k_i)* and the dense SMLM image *SMLM(K_i)* and several pairs are preferably generated from this formed pair (step 630). For the sake of illustration, this can be done by applying a random rotation (by a same random angle comprised between 0° to 360°) to each image of the pair, by random cropping (for example 512x512 pixels), by adding random noise, by modifying the intensity scale, and so on (other types of transformation such as shearing or elastic deformation can be used) in order to increase the number and the variability of the images to be used for training artificial neural network 300. In other words, a set of image transformations is applied on each image of the pair that has been formed for enhancing the training data set.

The pair that has been formed and the pairs that have been generated are then added to the training data set (step 635).

In following steps, $i$ is incremented by one (step 640) and a test is performed to determine whether index $i$ reaches a predetermined threshold denoted $max_i$ (step 645).

Steps 610 to 640 are repeated until index $i$ reaches this predetermined threshold to create further pairs *(SMLM(k_i); SMLM(K_i))*. It is to be noted here that the number $r$ of raw images is preferably higher than the number $K$ of raw images to be selected for reconstructing the dense SMLM images so that the latter vary.

Alternatively, only steps 610, 615, 630, 635, and 640 are repeated until index $i$ reaches this predetermined threshold so that only one dense SMLM image *SMLM(K_i)* is reconstructed for all reconstructed sparse SMLM image formed from the same set of raw images.

Next, index $j$ is incremented by one (step 650) and a test is performed to determine whether index $j$ reaches a predetermined threshold denoted $max_j$ (step 655).

If index $j$ has not reached the predetermined threshold $max_j$, index $i$ is reset to zero (step 660), a new set of $r$ raw images is obtained (step 605), and steps 610 to 645 are repeated.

For the sake of illustration, the maximum value for index $i$ may be equal to 200, the maximum value for index $j$ may be equal to 6, and the number of image transformations applied on the pairs that have been formed (step 630) may be equal to 100).

As an alternative, sparse SMLM images may be derived directly from dense SMLM images, for example by applying Poisson noise and/or noise obtained from other sources of noise.

**Figure 7** illustrates a second example of steps for creating images to be used for training artificial neural network 300 of Figure 3, according to which created images are based on simulation.

After having initialized index $i$ and $j$ to zero (step 700), index $i$ being associated with sparse SMLM images *SMLM(k)* and index $j$ being associated with dense SMLM images *SMLM(k),* simulation conditions are initialized (step 705). For the sake of illustration, such a step of initializing simulation conditions may comprise initializing multiple polymer chains as random walk.

Next, the simulation is carried out by simulating the evolution of the simulation conditions according to predetermined laws (step 710). Still for the sake of illustration, the simulation may be directed to a Langevin dynamics simulation used to simulate the stochastic temporal evolution of multiple polymer chains.

The result of the simulation is then transformed into a dense SMLM image that preferably defines a probability density of localization events in a SMLM image (step 715), for example a STORM image. This image is considered as being the dense image *SMLM(K)* described above. Such a transformation can be done, for example, by convolving the result of the simulation (in particular if it comprises zero thickness curves) with a Gaussian kernel.

Next, sparse SMLM images comparable to sparse SMLM images *SMLM(k)* described above can be derived from the image obtained in the previous step (step 720). This can be done, for example, by applying Poisson noise and additional background noise. This step is repeated in order to obtain as many sparse images as desired (steps 725 and 730), i.e. until index $j$ reaches a predetermined threshold denoted $max_j$. Likewise, steps 705 to 730 are repeated to obtain as many dense SMLM images as required and to obtain corresponding sparse images, i.e. until index $i$ reaches a predetermined threshold denoted $max_i$.

After having obtained sparse SMLM images and dense SMLM images, a list of pairs of sparse SMLM images and dense SMLM images is built (step 745). According to embodiments, each sparse SMLM image is associated with each dense SMLM image to form a pair.

Still according to particular embodiments, image transformations are applied to pairs of sparse SMLM images and dense SMLM images in order to increase the training data set and the variability of the data. Again, this can be done, for example, by applying a random rotation, by random cropping, by adding random noise, by modifying the intensity scale, and so on.

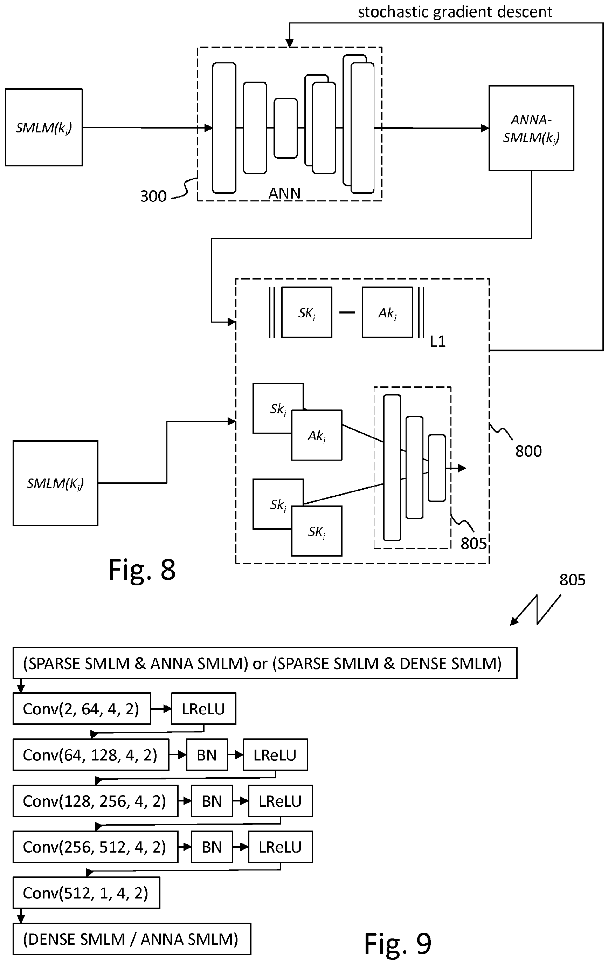

**Figure 8** illustrates schematically a second example of the architecture of a system for training an artificial neural network to be used for reconstructing synthetic dense SMLM images from raw images acquired by single molecule localization microscopy, based on cGAN/L1 loss.

A main difference between the architectures illustrated in Figure 3 and in Figure 8 lies in the objective function used for training artificial neural network 300.

According to the embodiment illustrated in Figure 8, parameters of artificial neural network 300 are adjusted as a function of a cGAN loss that combines adversarial generator and discriminator losses with a weighed sum of the L1 norm between an obtained result and the corresponding desired result, denoted 800.

Generative adversarial networks (GAN) and conditional adversarial networks (cGAN) are known artificial neural networks described, for example, in the articles entitled *"Generative Adversarial Nets"*, Goodfellow, I. et al., 2672-2680 (2014) and *"Image-to-Image Translation with Conditional Adversarial Networks"*, Isola, P., Zhu, J.-Y., Zhou, T. & Efros, A. A.. (2016).

Computation on the cGAN loss is based on generative adversarial networks (GAN) that can learn to generate new samples from real image distributions based on a set of observed examples. Discriminator network 805 takes a sparse SMLM image *SMLM(k)* (Sk in short) and the corresponding real or synthetic dense SMLM image as input, i.e. a dense SMLM image *SMLM(K)* (SK in short) or an output *ANNA-SMLM(k)* of artificial neural network 300 (Ak in short), and outputs the probability that the image (*SMLM(K)* or *ANNA-SMLM(k)*) is real or synthetic.

Artificial neural network 300, considered here as a generator network, and discriminator network 805 are trained simultaneously, the discriminator trying to tell apart real from synthetic data and the generator trying to fool the discriminator.

**Figure 9** illustrates an example of architecture of discriminator network 805 used during the training phase of artificial neural network 300 in Figure 8.

The input of the discriminator network is a pair of images. The first input image is a sparse SMLM image originating from experimental fluorophore localization data or from simulation data as described by reference to Figures 6 and 7. The second image is either the output of artificial neural network 300 (using the first input image as input) or a dense SMLM image obtained from SMLM image processing, for example STORM image processing, or obtained from simulation. The output of the discriminator network is a small image whose pixels correspond to image patches of the input images. The pixel values are large when the discriminator network believes that the patch corresponds to a dense SMLM image obtained from SMLM imaging or obtained from simulation and small when it believes that the patch corresponds to an image produced by artificial neural network 300.

According to embodiments, discriminator network 805 has 5 convolutional layers and 2,764,544 parameters. Its input are two *(256m) x (256m)* pixel image patches (the sparse SMLM image and either its ANNA-SMLM reconstruction or the corresponding dense SMLM image) and its output is a *(30m) x (30m)* image whose pixel values indicate whether the corresponding input patch is real or generated, where $m$ is an integer. The second, third, and fourth convolutional layers are followed by batch normalization. Again, activation functions are leaky rectified linear units that may be expressed as follows:

$$x \rightarrow \max(x, 0) + \min(\varepsilon x, 0) \text{ with } \varepsilon = 0.2$$

The notation of the convolution units, leaky rectified linear units, and batch normalization units of Figure 9 are similar to those described by reference to Figure 5.

Again, it is considered that a sparse SMLM input image is denoted $S$, the corresponding dense SMLM image (e.g. a dense STORM image), i.e. the desired output of artificial neural network 300 is denoted $T$, and the real output of artificial neural network 300 is denoted $A = \mathcal{G}(S)$, where $\mathcal{G}$ designates the generator, i.e. artificial neural network 300. Again, images $S$, $T$ and $A$ corresponds to images $SMLM(k)$, $SMLM(K)$, and ANNA-$SMLM(k)$, respectively.

The objective function used in the embodiment illustrated in Figure 8 draws from recent work on generative adversarial networks (GAN). In GANs, a generator network $\mathcal{G}$ learns to transform random input vectors z (drawn from a probability density $p_z(z)$) into new samples of a data probability density $p_{\text{data}}(x)$. According to the embodiment illustrated in Figure 8, the data samples $x$ are the dense SMLM images $T$. The generator network $\mathcal{G}$ learns by working against a discriminator network $\mathcal{D}$ that simultaneously learns to discriminate between original data samples and samples generated by generator network $\mathcal{G}$. Adversarial training thus consists in playing a minmax game such that

$$(\mathcal{G}^*, \mathcal{D}^*) = argmin_{\mathcal{G}} max_{\mathcal{D}} \mathcal{L}_{GAN}(\mathcal{G}, \mathcal{D})$$

with an objective function of the following form:

$$\mathcal{L}_{GAN}(\mathcal{G}, \mathcal{D}) = \mathbb{E}_{x \sim p_{\text{data}}(x)} log[\mathcal{D}(x)] + \mathbb{E}_{z \sim p_z(z)} log\big[1 - \mathcal{D}(\mathcal{G}(z))\big]$$

or equivalently by simultaneous optimization of the two following coupled loss functions:

$$\begin{cases} \mathcal{D}^* = argmax_{\mathcal{D}}\big(\mathbb{E}_{x \sim p_{\text{data}}(x)} log[\mathcal{D}(x)] + \mathbb{E}_{z \sim p_z(z)} log\big[1 - \mathcal{D}(\mathcal{G}(z))\big]\big) \\ \mathcal{G}^* = argmin_{\mathcal{G}}\big(\mathbb{E}_{z \sim p_z(z)} log\big[1 - \mathcal{D}(\mathcal{G}(z))\big]\big) \end{cases}$$

It is to be noted that in a conditional GAN (cGAN), the generator and the discriminator networks have an extra input vector c which leads to the following objective function:

$$\mathcal{L}_{cGAN}(\mathcal{G}, \mathcal{D}) = \mathbb{E}_{(c,x) \sim p_{\text{data}}(c,x)} log[\mathcal{D}(c, x)] + \mathbb{E}_{c \sim p_{\text{data}}(c), z \sim p_z(z)} log\big[1 - \mathcal{D}(c, \mathcal{G}(z))\big]$$

such that the generator learns a conditional probability density $p_{\text{data}}(x|c)$.

According to the embodiment illustrated in Figure 8, input c is the sparse SMLM image $S$. In addition to satisfying the cGAN objective, it is preferable to have artificial neural network 300 output images that are similar to the target images. Accordingly, an L1 penalty between the generator output and the target image has been added, weighted by a scalar coefficient $\mu = 100$ (L1 being preferred to L2 because it penalizes blurring).

The logarithmic losses described above may be replaced by least square losses that prove to give good results.

Accordingly, the optimization problem for adjusting the parameters of generator network $\mathcal{G}$ (i.e. artificial neural network 300) may be expressed as follows:

$$\begin{cases} \mathcal{D}^* = argmax_{\mathcal{D}}\Big[\mathbb{E}_{S,T \sim p_{data}(S,T)}(\mathcal{D}(S,T) - 1)^2 + \mathbb{E}_{z \sim p_z(z), S \sim p_{data}(S)}\Big(\mathcal{D}\big(S, \mathcal{G}(S,z)\big)\Big)^2\Big] \\ \mathcal{G}^* = argmin_{\mathcal{G}}\Big[\mathbb{E}_{z \sim p_z(z), S \sim p_{data}(S)}\big(\mathcal{D}(S, \mathcal{G}(S,z)) - 1\big)^2 + \mu\|\mathcal{G}(S,z) - T\|_{L1}\Big] \end{cases}$$

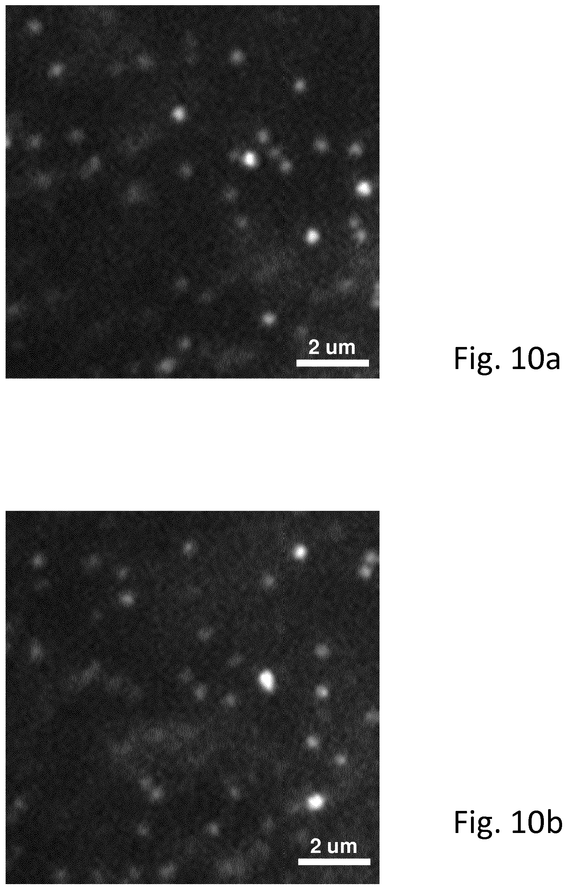

Figures 10 to 14 illustrate the performance of the system illustrated in Figure 4 after it has been trained according to the embodiments described by reference to Figures 3 and 8. For the sake of illustration, the system is tested on real images of immunolabeled microtubes. Figures 10a, 10b, 11a, 12a, 13a, and 14a illustrate examples of raw images, sparse STORM image, dense STORM image, and ANNA-STORM images obtained for the same field of view.

Still for the sake of illustration, training of artificial neural network 300 is based on six dense SMLM images, each obtained from STORM image processing from 60,000 raw images of microtubules (representing a 10min sequence) and on approximately 20,000 sparse SMLM images each obtained from STORM image processing from 300 raw images selected among the same set as the one used for obtaining the dense SMLM images (representing a 7.5s sequence). The number of fluorophore localizations per raw image varies from approximately 3 to 25.

**Figures 10a and 10b** illustrate an example of raw images acquired by single molecule localization microscopy. Each image shows a small number of fluorophore localizations.

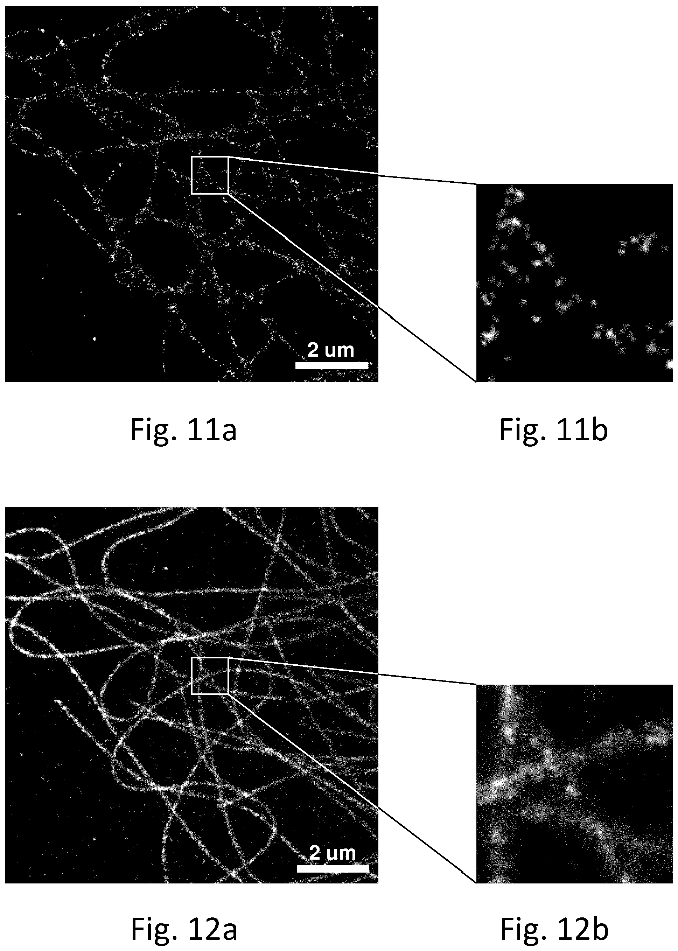

**Figure 11a** illustrates an example of a sparse SMLM image reconstructed by STORM image processing from 250 (k = 250) raw images. **Figure 11b** represents a zoom of a small portion (region of interest) of the image illustrated in Figure 11a.

While microtubule filaments can already be seen in this sparse STORM image, local structural details are hard to discern, making it difficult to follow the path of individual filaments and to identify local features such as filament crossings. This sparse STORM image has sub-optimal resolution as measured by the Nyquist criterion.

**Figure 12a** illustrates an example of a dense SMLM image reconstructed by STORM image processing from 149,687 (K = 149,687) raw images. **Figure 12b** represents a zoom of a small portion (region of interest) of the image illustrated in Figure 12a.

As can be seen, the image reconstructed from a huge number of raw images makes it possible to analyze details of the filaments.

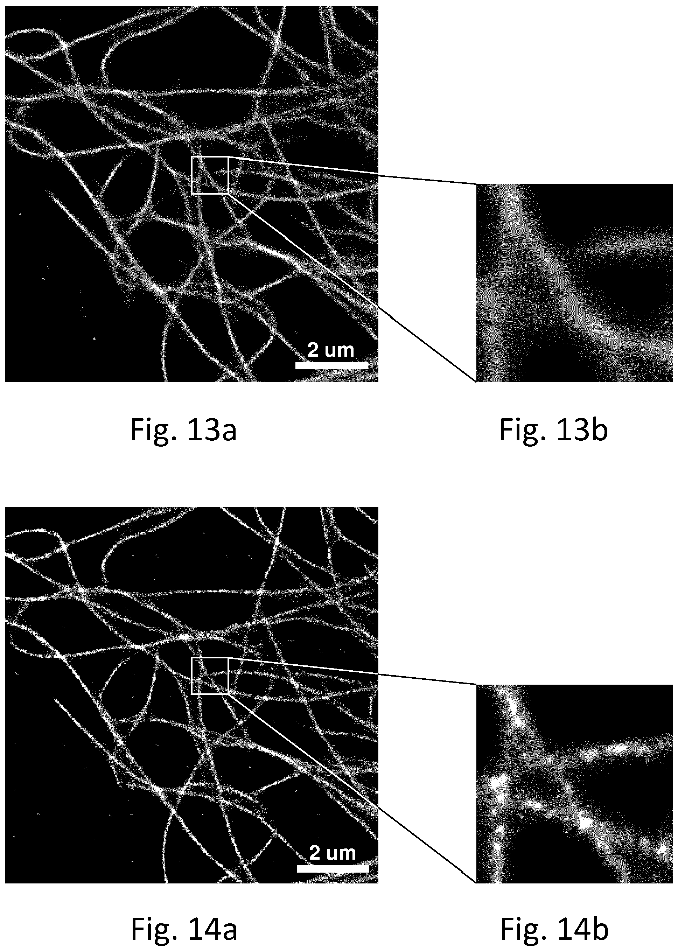

**Figure 13a** illustrates an example of a synthetic dense SMLM image (ANNA-SMLM image) reconstructed according to embodiments of the invention after artificial neural network 300 has been trained with the L2 loss objective function, as described by reference to Figure 3.

The represented image is the output of artificial neural network 300 after inputting a sparse SMLM image obtained by STORM image processing from 250 (k = 250) raw images, as shown in Figure 11 a.

**Figure 13b** represents a zoom of a small portion (region of interest) of the image illustrated in Figure 13a.

**Figure 14a** illustrates an example of a synthetic dense SMLM image (ANNA-SMLM) reconstructed according to embodiments of the invention after artificial neural network 300 has been trained with the cGAN/L1 loss objective function, as described by reference to Figure 8.

The represented image is the output of artificial neural network 300 after inputting a sparse SMLM image obtained by STORM image processing from 250 (k = 250) raw images as shown in Figure 11a.

**Figure 14b** represents a zoom of a small portion (region of interest) of the image illustrated in Figure 14a.

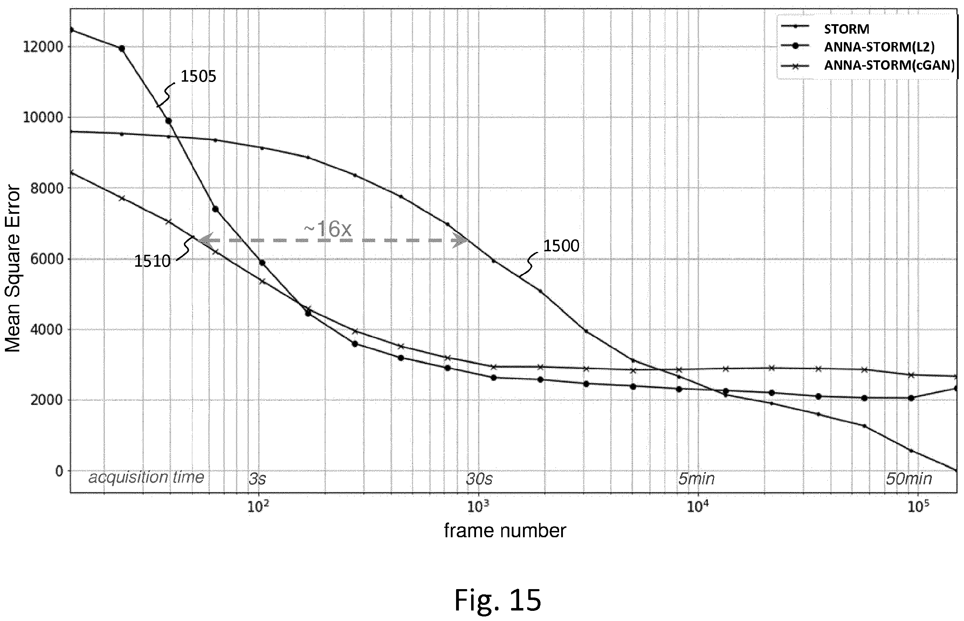

**Figure 15** illustrates the mean square error (MSE) as a function of the image (or frame) number (k) or acquisition time between synthetic dense STORM images (ANNA-STORM) or dense STORM images and the ground truth as defined by the dense STORM image with $K$ = 149,687 images, depending on the L2 and cGAN/L1 losses.

The curve denoted 1500 represents the mean square error between the standard STORM image (e.g. the STORM image represented in Figure 11 a), denoted STORM, and the ground truth (e.g. the dense STORM image represented in Figure 12a).

Curve denoted 1505 represents the mean square error between the synthetic dense SMLM image (ANNA-SMLM) obtained according to embodiments of the invention while using the L2 loss for training artificial neural network 300 (e.g. the synthetic dense SMLM image represented in Figure 13a), denoted ANNA-STORM(L2), and the ground truth (e.g. the dense STORM image represented in Figure 12a).

The curve denoted 1510 represents the mean square error between the synthetic dense SMLM image (ANNA-SMLM) obtained according to embodiments of the invention while using the cGAN/L1 losses for training artificial neural network 300 (e.g. the synthetic super-resolution image represented in Figure 14a), denoted ANNA-STORM(cGAN), and the ground truth (e.g. the dense STORM image represented in Figure 12a).

As it is apparent from Figure 15, embodiments of the invention make it possible to reconstruct synthetic dense SMLM images of about the same quality as dense SMLM images reconstructed according to standard algorithms, for example dense SMLM images reconstructed according to STORM image processing, from a much smaller number of raw images leading to a much shorter period of acquisition. As illustrated, reconstructing an ANNA-STORM(cGAN) image may require sixteen time less raw images and so be sixteen time shorter to acquire than reconstructing a standard dense STORM image (while the quality is about the same). This image or time ratio may vary depending on factors such as the type of imaged structure and the image noise, and the definition of the reconstruction error metric.

It is to be noted that while two different objective functions for training artificial neural network 300 have been described, other objective functions may be used. Moreover, several objective functions may be combined with each other to improve training of artificial neural network 300. In particular, it is possible to combine the use of cGAN with L1 norm as described above and to combine the use of cGAN with L2 norm.

It is also to be noted that other types and/or other architectures of artificial neural networks may be used.

The use of a computational method based on deep learning to reconstruct high quality super-resolution images from sparsely sampled, rapidly acquired, single molecule localization data, enables considerable gains in acquisition time compared to standard localization microscopy and (unlike other approaches) does not require higher fluorophore activation density, and hence does not compromise spatial resolution.

The drastic improvement in imaging efficiency afforded by embodiments of the invention alleviates the incompatibility between localization microscopy and high throughput imaging, and enables super-resolution imaging of hundreds of cells on time scales commonly used to image just a few cells. This facilitates super-resolution imaging studies of rare events, cellular heterogeneity and of partly stochastic structures such as cytoskeletal polymers or chromosomes, whose characterization requires statistics on many configurations. Embodiments of the invention are also applicable to high throughput imaging of large numbers of experimental conditions, e.g. drug treatments or gene knock-outs. In addition, they can be applied to imaging large samples at high resolution, by stitching together multiple images of spatially adjacent fields. For example, embodiments of the invention require only a few hours to generate images spanning nearly five orders of magnitude in scale, from about 2 mm down to about 20 nm. This capability could be well adapted to expansion microscopy, an alternative super-resolution technique that physically increases sample size, but often requires tiling many fields of view to image even a single cell. Thus, embodiments of the invention are adapted to multiscale super-resolution imaging.

Indeed, the drastic improvement in imaging efficiency afforded by embodiments of the invention (in particular regarding the overall acquisition and processing time) opens the door to imaging of many more cells and fields of view (FOVs) per unit time. This has been demonstrated by using an automated acquisition protocol to image cells with immunolabeled microtubules in more than a thousand (33x33=1,089), partly overlapping, FOVs. Using only about 10s of imaging (e.g. k = 1,000 images) per FOV, 1,089 sparse STORM images of 55.3 $\mu$m x 55.3 $\mu$m each have been obtained, in a total of only about three hours. These sparse SMLM images provided little small scale information. However, embodiments of the invention, in particular when using cGAN loss for the training phase, led to high quality synthetic dense SMLM images, making it possible to view the microtubule network with clarity and to distinguish microtubule filaments in dense areas that appeared as unstructured regions in the sparse STORM image. Stitching these images together yielded a single synthetic dense SMLM image showing many hundreds of cells. This image contained approximately 7 billion 20x20 nm pixels and covered an area of 1.8 mm x 1.8 mm, thereby spanning almost five orders of magnitude in spatial lengths. Therefore, embodiments of the invention make it possible to obtain multiscale images of large fields of view, containing many hundreds of cells, within a time span that for standard localization microscopy is typically consumed to image a much smaller number of cells.

It is to be noted that embodiments of the invention strongly reduce the need for drift correction because the acquisition time of raw images is reduced, leading to the reduction of the effect of spatial drift.

Indeed, a common problem in SMLM microscopy is drift of the specimen during image sequence acquisition which can degrade spatial resolution if not properly corrected for or prevented. Computational correction of drift after acquisition requires sophisticated algorithms and/or fiducial markers such as fluorescent beads. Real-time correction of drift requires additional optical and electronic devices.

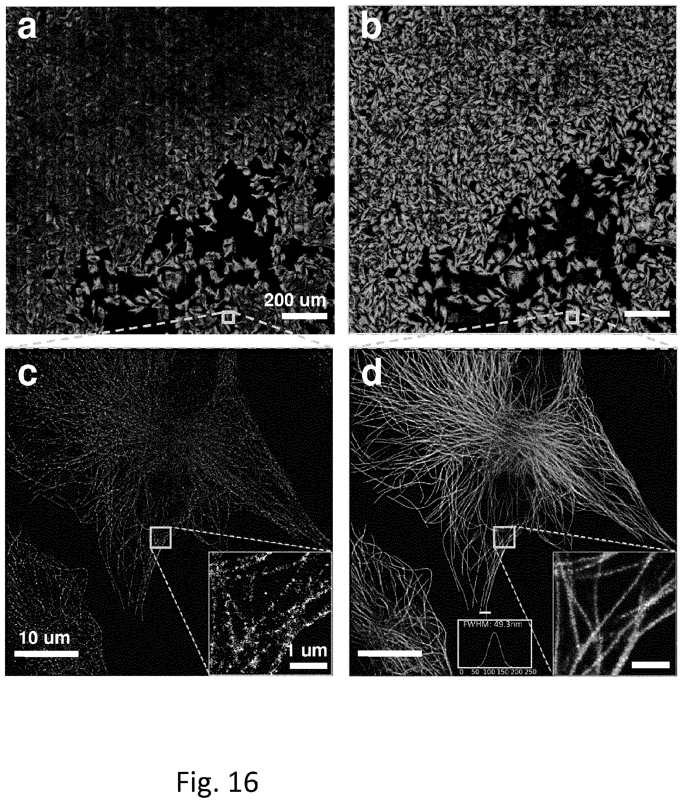

**Figure 16**, comprising Figures 16a to 16d, illustrates the use of embodiments of the invention to high throughput imaging of a 1.8 mm x 1.8 mm area containing many hundreds of cells.

More precisely, Figure 16a is a sparse STORM image of the 1.8 mm x 1.8 mm area, obtained by assembling a mosaic from 33 x 33=1,089 sparse STORM images of individual fields of view, obtained from 1,000 raw images each (with At=10 862 ms exposure time per image). The time needed for acquiring all these images is about 3 hours. The sparsity of the image is not apparent at this large scale.

A magnified view of the green boxed region in Figure 16a is illustrated in Figure 16c. The inset shows a magnified view of the boxed region, highlighting the sparsity of the image.

Figure 16b is a synthetic dense STORM image (ANNA-STORM(cGAN)) of the same area of the one represented in Figure 16a, obtained according to embodiment of the invention. It is obtained by assembling a mosaic of 1,089 individual reconstructed synthetic dense STORM images (one per field of view).

A magnified view of the boxed region in Figure 16b is illustrated in Figure 16d. Again, the inset shows a magnified view of the boxed region, highlighting the sparsity of the image. A line profile across a microtubule is shown, with a FWHM < 50 nm (FWHM: full width at half maximum).

Embodiments of the invention are robust to experimental perturbations. Indeed, the ability to reconstruct highly detailed synthetic dense SMLM images from sparse localization data relies on its prior training on similar images. This raises the question of whether an artificial neural network trained in one experimental condition can be successfully applied to another condition. In order to test this, artificial neural network 300 has been trained on microtubules (as described by reference to Figures 10 to 14) to analyze images of cells subjected to drugs affecting the cytoskeletal network. U373 cells were first treated with 1 $\mu$M of Taxol, an antimitotic agent that inhibits the depolymerization of microtubules and is known to increase their bending rigidity. The results obtained by embodiments according to the invention clearly display a complex microtubule network and are validated by comparison with the dense STORM image reconstructed from K=30,000 images (representing 5 to 15 min sequence). The arrangement of microtubules visible in these reconstructions is characterized by a larger density of straighter and more parallel microtubules with less frequent apparent crossings than in the untreated control cells, consistent with the expected effect of inhibited microtubule depolymerization and increased rigidity.

Next, cells were treated with 1 $\mu$M of Nocodazole, a drug that promotes microtubule depolymerization and is expected to more dramatically alter the cytoskeletal network. Again, whereas the sparse STORM image contained little exploitable information, the results obtained according to embodiments of the invention offered clear and detailed views of the disrupted microtubule network, exhibiting a much smaller number of filaments, with higher curvature, than in untreated cells. These reconstructions were in good agreement with dense STORM images obtained from K=30,000 images (representing a 5 min sequence). Therefore, based on training on microtubules in one experimental condition, embodiments of the invention may be successfully applied to cells in new experimental conditions without any retraining, thus highlighting the method's robustness.

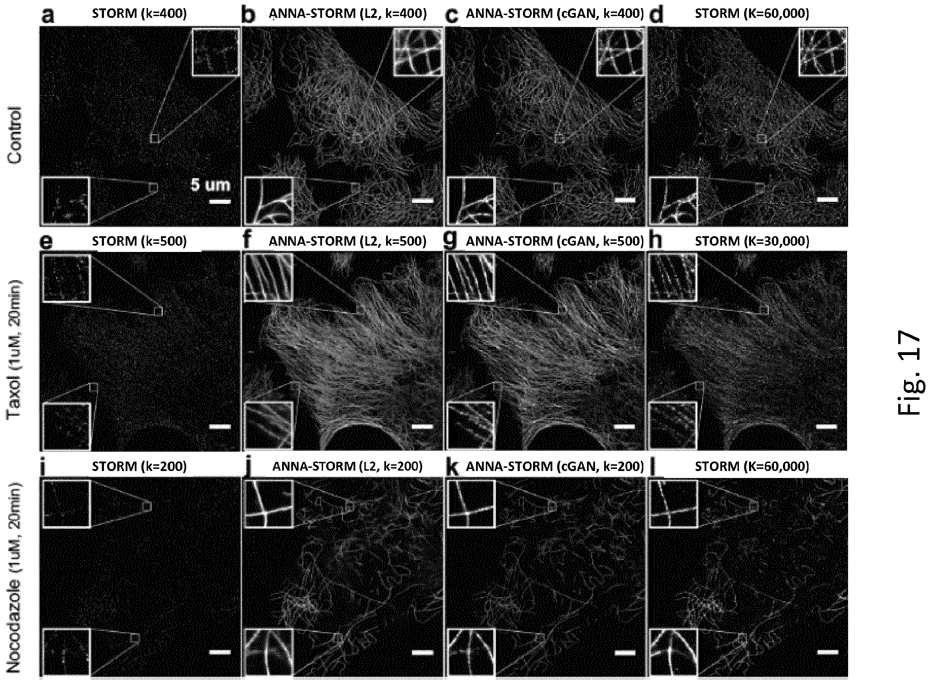

**Figure 17**, comprising Figures 17a to 17l, illustrates the robustness of embodiments of the invention to experimental perturbations.

More precisely, Figure 17 are STORM and ANNA-STORM images of microtubules in untreated cells (Figures 17a to 17d) and cells treated with 1 $\mu$M of Taxol (Figures 17e to 17h) or 1 $\mu$M of Nocodazole (Figures 17i to 17l).

Figures 17a, 17e, and 17i are sparse STORM images obtained from the first k=400 (Figure 17a), k=500 (Figure 17e) or k = 200 raw images (Figure 17i). The full 55 $\mu$m x 55 $\mu$m field of view is shown.

Figures 17b, 17f and 17j are ANNA-STORM images obtained with the L2 loss.

Figures 17c, 17g and 17k are ANNA-STORM images obtained with the cGAN loss.

Figures 17d, 17h, 17l are dense STORM images obtained from K=60,000 (Figure 17d) or K=30,000 raw images (Figures 17h and 17l).

Number of localizations in the sparse and dense STORM images are as follows: Figure 17a n= 283,103, Figure 17d: N≈6 million, Figure 17e n= 422,248, Figure 17h N≈5.7 million, Figure 17i n=72,316, Figure 17l : N≈2.6 million.

Embodiments of the invention are adapted to different biological structures. Indeed, the deep learning strategy according to the invention is not restricted to microtubules or other filaments, but can in principle adapt to any type of image if trained accordingly. To show this flexibility, nuclear pores, a very different biological structure, and another popular target of super-resolution imaging studies have been considered. It has been observed that embodiments of the invention make it possible to dramatically improve image quality, making it possible to identify almost all individual pores unambiguously, and almost every individual nucleoporin within them at their correct location (albeit with some errors).

Embodiments of the invention have been tested on experimental images of the nucleoporin gp210 in immunolabeled nuclear membranes of Xenopus frog eggs. For the training phase, two dense STORM images were used, with K = 30,000 images each and containing about 20 million fluorophore localizations. Embodiments of the invention were then applied to a sparse STORM image of gp210 obtained from the first k = 6,000 images. The sparsity of this image makes it difficult to clearly distinguish individual nuclear pores. Embodiments of the invention provides a much clearer image, containing many ring-like structures, as expected for nuclear pores.

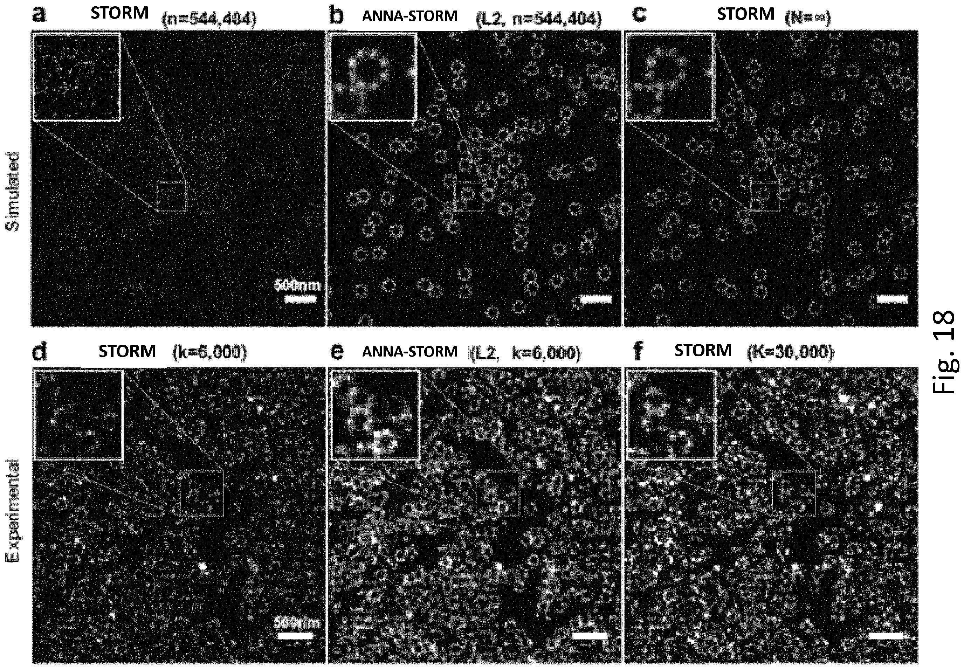

**Figure 18**, comprising Figures 18a to 18f, illustrates the use of embodiments of the invention to different biological structures.

More precisely, Figure 18 shows the application of embodiments of the invention to simulated (Figures 18a to 18c) and real (Figures 18d to 18f) nuclear pores.

Figure 18a is a simulated sparse STORM image with n = 544,404 localizations. Individual nuclear pores are hard to identify.

Figure 18b is an ANNA-STORM image obtained with the L2 loss. Individual nuclear pores, containing 8 nucleoporins, are clearly visible, with few exceptions.

Figure 18c is the ground truth simulated STORM image (corresponding to an infinite number of localizations, N=∝).

Figure 18d is a sparse STORM image of the Xenopus nucleoporin gp210 immunolabeled with Alexa 647, as obtained from the first k=6,000 raw images (n=25,920 for the 8 $\mu$m x 8 $\mu$m region of interest shown, n=3,665,498 for the entire 54 $\mu$m x 54 $\mu$m field of view).

Figure 18e is an ANNA-STORM(L2) images of the image in Figure 18d using the L2 loss.

Figure 18f is a STORM image obtained from all K=30,000 raw images (N=115,669 for the region shown, N=15,345,116for the whole FOV)

Together with the results on microtubules above, this illustrates the versatility of embodiments of the invention and their applicability to images of very different structural content.

Moreover, embodiments of the invention facilitate dynamic super-resolution imaging in live cells. Indeed, it makes it possible to use fewer consecutive raw images than SMLM or equivalent image processing methods to reconstruct a single super-resolution movie frame, and hence improve upon the temporal resolution without sacrificing spatial resolution. It does not require higher excitation power, and hence does not suffer from additional phototoxicity and photobleaching, thereby allowing prolonged observations in gentler conditions. Thus, it allows faster and longer live cell super-resolution imaging without excessive photodamage.

Moreover, embodiments of the invention can be extended to reconstructing 3D synthetic dense SMLM images in a relatively straightforward way. The requirements are a training data set consisting of dense 3D SMLM data and one or more sparse 3D SMLM data to be reconstructed after training of the ANN. The ANN architecture will need to be modified to accommodate 3D input and output data. The 3D SMLM data can be obtained using a variety of techniques, including point spread function (PSF) engineering (e.g. astigmatism, double helix or saddle point PSFs) or bi-plane imaging, or interferometric SMLM (e.g. iPALM) with or without z-stepping.

Moreover, embodiments of the invention can be extended to multicolor imaging in several ways.

A first approach is to consider SMLM data consisting of raw images taken in $p$, an integer superior to 1, color channels, which are being processed to obtain $p$ sparse SMLM images. Each color can then be processed independently of the others using the embodiments of the invention (that may be considered as a monocolor ANNA-PALM method), such that $p$ ANNs are trained independently, one for each color, the requirements for training data being the same as for monocolor ANNA-PALM. For inference, sparse multicolor SMLM images are then fed into these $p$ ANNs (each color being assigned to its corresponding ANN), and the resulting $p$ synthetic dense SMLM images are combined into a dense multi-color super-resolution image.

A second approach is to use a single ANN to process $p$ color channels simultaneously, taking $p$ sparse SMLM images (one for each color) as input, and generating $p$ dense SMLM images as output (one for each color). This will require minor modifications to the ANN architecture to accommodate $p$ color channels as input and ouput. In this second approach, the ANN can learn the joint probability density of all $p$ color channels simultaneously. As a consequence, the reconstruction of each color channel can be influenced by the information content of the other color channels, allowing further improvements of reconstruction quality and/or acquisition efficiency.

A third approach is to train an ANN to produce multi-color images as output from single color input data, i.e. performing color unmixing. In this approach, the training data would consist of SMLM images acquired in $p$ color channels, each corresponding to a different target molecule. The $p$ color images can be combined into a single color image simply by ignoring the color channel. The ANN can be trained using this single color image (which contains localizations from all $p$ molecular species) as input, with the $p$ color images as target outputs. The input data can be sparser than the target data (as in monocolor ANNA-PALM) or not (for color unmixing without reduction of acquisition time). Once trained, this ANN will be applied to images where the $p$ molecular species are imaged in the same color channel. This strategy can increase the number of distinct species that can be imaged simultaneously (with SMLM or not), since it no longer requires spectrally distinguishable fluorescent dyes.

It is to be noted that embodiments of the invention do not necessitate any changes to existing localization microscopy systems, but only require a few standard SMLM images for training, for example STORM images (being observed that even though a single STORM image is sufficient to train the system, even better results (higher accuracy or efficiency) can be expected by training the system on a larger set of images).

**Figure 19** schematically illustrates a processing device 1900 configured to implement at least one embodiment of at least part of the invention, for example one or several of the algorithms described by reference to Figures 3 to 9. The processing device 1900 may be a device such as a micro-computer, a workstation, or a highly parallel computer. The device 1900 comprises a communication bus 1913 to which there are preferably connected:

- a central processing unit 1911, such as a microprocessor, denoted CPU;
- a read only memory 1907, denoted ROM, for storing computer programs for implementing the invention;
- a random access memory 1912, denoted RAM, for storing the executable code of the method of embodiments of the invention as well as the registers adapted to record variables and parameters necessary for implementing the method for improving the assembling of raw images obtained by single molecule localization microscopy according to embodiments of the invention; and
- a communication interface 1902 connected to a communication network 1903 over which digital data to be processed can be transmitted.

Optionally, the apparatus 1900 may also include the following components:

- a data storage means 1904 such as a hard disk, for storing computer programs for implementing methods of one or more embodiments of the invention and data used or produced during the implementation of one or more embodiments of the invention;
- a disk drive 1905 for a disk 1906, the disk drive being adapted to read data from the disk 1906 or to write data onto said disk;

- a screen 1909 for displaying data and/or serving as a graphical interface with the user, by means of a keyboard 1910 or any other pointing means; and
- graphic processing units (GPU), not represented, that allow parallel processing of large matrix data and that may be used, in particular, for carrying out operations of the artificial neural network(s). GPU may prove to be important for optimizing computation time.

The communication bus provides communication and interoperability between the various elements included in the apparatus 1900 or connected to it. The representation of the bus is not limiting and in particular the central processing unit is operable to communicate instructions to any element of the apparatus 1900 directly or by means of another element of the apparatus 1900.

The disk 1906 can be replaced by any information medium such as for example a compact disk (CD-ROM), rewritable or not, a ZIP disk or a memory card and, in general terms, by an information storage means that can be read by a microcomputer or by a microprocessor, integrated or not into the apparatus, possibly removable and adapted to store one or more programs whose execution enables the method for improving the assembling of raw images obtained by single molecule localization microscopy according to embodiments of the invention to be implemented.

The executable code may be stored either in read only memory 1907, on the hard disk 1904 or on a removable digital medium such as for example a disk 1906 as described previously. According to a variant, the executable code of the programs can be received by means of the communication network 1903, via the interface 1902, in order to be stored in one of the storage means of the apparatus 1900 before being executed, such as the hard disk 1904.

The central processing unit 1911 is adapted to control and direct the execution of the instructions or portions of software code of the program or programs according to the invention, instructions that are stored in one of the aforementioned storage means. On powering up, the program or programs that are stored in a nonvolatile memory, for example on the hard disk 1904 or in the read only memory 1907, are transferred into the random access memory 1912, which then contains the executable code of the program or programs, as well as registers for storing the variables and parameters necessary for implementing the invention.

In this embodiment, the apparatus is a programmable apparatus which uses software to implement the invention. However, alternatively, the present invention may be implemented in hardware (for example, in the form of an Application Specific Integrated Circuit or ASIC).

Naturally, in order to satisfy local and specific requirements, a person skilled in the art may apply to the solution described above many modifications and alterations all of which, however, are included within the scope of protection of the invention as defined by the following claims.

**Claims**

1. A computer method for reconstructing at least one synthetic dense super-resolution image from a sequence of diffraction-limited images acquired by single molecule localization microscopy, the method comprising the steps of:

- obtaining a sequence of diffraction-limited images acquired by single molecule localization microscopy;
- reconstructing a sparse localization image from the obtained sequence of diffraction-limited images according to single molecule localization microscopy image processing;
- inputting the reconstructed sparse localization image to an artificial neural network, and
- obtaining a synthetic dense super-resolution image from the artificial neural network,

wherein the artificial neural network has been trained with training data comprising pairs of sparse localization images and corresponding dense super-resolution images, as a function of a training objective function comparing dense super-resolution images and corresponding outputs of the artificial neural network.

2. The method according to claim 1 wherein the single molecule localization microscopy is photo-activated localization microscopy (PALM), stochastic optical reconstruction microscopy (STORM), or point accumulation for imaging in nanoscale topography (PAINT).

3. The method according to claim 1 or claim 2 wherein the obtained sequence of diffraction-limited images comprises less than 300 diffraction-limited images, each of the diffraction-limited images comprising between 1 to 100 fluorophore localizations.

4. The method according to any one of claims 1 to 3 wherein at least one of the dense super-resolution images used to train the artificial neural network is built from a sequence of at least 30,000 diffraction-limited images acquired by single molecule localization microscopy.

5. The method according to any one of claims 1 to 4 wherein the diffraction-limited images of the obtained sequence correspond to a first field of view of a field of study, the steps of obtaining a sequence of diffraction-limited images, reconstructing a sparse localization image from the obtained sequence of diffraction-limited images, inputting the reconstructed sparse localization image to the artificial neural network, and obtaining a synthetic dense super-resolution image from the artificial neural network being repeated for at least one second field of view of the field of study, the first and the second fields of view being different.

6. The method according to claim 5 wherein the first field of view and the second field of view are contiguous within the field of study, the method further comprising a step of creating a resulting image by stitching synthetic dense super-resolution images obtained from the artificial neural network.

7. The method according to any one of claims 1 to 4 wherein the diffraction-limited images of the obtained sequence correspond to a predetermined field of view, the steps of obtaining a sequence of diffraction-limited images, reconstructing a sparse localization image from the obtained sequence of diffraction-limited images, inputting the reconstructed sparse localization image to the artificial neural network, and obtaining a synthetic dense super-resolution image from the artificial neural network being repeated periodically for the same field of view.

8. The method according to any one of claims 1 to 7 wherein the artificial neural network comprises an encoder network and a decoder network, the encoder network comprising a plurality of convolution layers and of down-sampling layers and the decoder network comprising a plurality of deconvolution layers and of up-sampling layers.

9. The method according to claim 8 wherein the artificial neural network is of the U-net type.

10. The method according to any one of claims 1 to 9 further comprising a step of training the artificial neural network.

11. The method according to claim 10 further comprising a step of pairing sparse localization images and corresponding dense super-resolution images for training the artificial neural network.

12. The method according to claim 11 wherein the step of pairing sparse localization images and corresponding dense super-resolution images comprises:

- obtaining a training sequence of diffraction-limited images acquired by single molecule localization microscopy;
- reconstructing a plurality of sparse localization images from first sub-sets of the obtained training sequence of diffraction-limited images according to a single molecule localization microscopy image processing; and
- reconstructing a plurality of dense super-resolution images from second sub-sets of the obtained training sequence of diffraction-limited images according to a single molecule localization microscopy image processing, each of the second sub-sets comprising more diffraction-limited images than each of the first sub-sets.

13. The method according to claim 12 further comprising a step of building additional sparse localization images by transforming at least one sparse localization image of the plurality of sparse localization images.

14. The method according to claim 13 wherein the step of transforming at least one sparse localization image comprises adding noise to at least one sparse localization image, rotating at least one sparse localization image, cropping at least one sparse localization image, modifying at least one sparse localization image, modifying the intensity scale of at least one sparse localization image, shearing at least one sparse localization image, and/or applying an elastic deformation to at least one sparse localization image.

15. The method according to any one of claims 1 to 14 wherein the training objective function comprises at least one of an objective function based on the L1 norm, on the L2 norm, on dice coefficients, and on an artificial neural network of the generative adversarial network type or of the conditional generative adversarial network type.

16. An apparatus comprising means configured for carrying out each step of the method according to any one of claims 1 to 15.

17. A computer program product for a programmable apparatus, the computer program product comprising instructions for carrying out each step of the method according to any one of claims 1 to 16 when the program is loaded and executed by a programmable apparatus.

$t_1$      $t_2$      $t_K$    t

105

| raw image 1 | raw image 2 | • • • | raw image K |

100-1      100-2      100-K

110    STORM image processing

## Fig. 1

STORM image

115

ROM   1907

1911

CPU

1913

RAM   1912

1900

Screen   1909

Communication Interface

Network

Keyboard   1910

1902

1903

Hard disk   1904

Disk drive

Disk

1905

1906

## Fig. 19

Fig. 2

stochastic gradient descent

$SMLM(k_i)$

ANN

300

ANNA-$SMLM(k_i)$

$SK_i$ — $Ak_i$

L2

305

$SMLM(K_i)$

## Fig. 3

raw image' 1

raw image' 2

raw image' 3

raw image' k

$SMLM'(k)$

ANN

300

ANNA-$SMLM'(k)$

## Fig. 4

300

SPARSE SMLM

Conv(1, 64, 4, 2)

LReLU → Conv(64, 128, 4, 2) → BN

LReLU → Conv(128, 256, 4, 2) → BN

LReLU → Conv(256, 512, 4, 2) → BN

LReLU → Conv(512, 512, 4, 2) → BN

LReLU → Conv(512, 512, 4, 2) → BN

LReLU → Conv(512, 512, 4, 2) → BN

LReLU → Conv(512, 512, 4, 2) → BN

500

ReLU → TConv(512, 512, 4, 2) → BN

Cat → ReLU → TConv(1024, 512, 4, 2) → BN → Dropout

Cat → ReLU → TConv(1024, 512, 4, 2) → BN → Dropout

Cat → ReLU → TConv(1024, 512, 4, 2) → BN → Dropout

Cat → ReLU → TConv(1024, 256, 4, 2) → BN

Cat → ReLU → TConv(512, 128, 4, 2) → BN

Cat → ReLU → TConv(256, 64, 4, 2) → BN

Cat → ReLU → TConv(128, 1, 4, 2) → Tanh

ANNA SMLM

505

Fig. 5

**Fig. 6**

700

i = 0, j = 0

initializing simulation conditions

705

710

simulating evolution from
simulation conditions

715

convolving simulated evolution
result to obtain a super-resolution
image ($\approx$SMLM(K))

720

simulating photo-activated
localization microscopy  ($\approx$SMLM(k))

725

j++

730

j=max$_j$?

735

i++

740

i=max$_i$?

building list of pairs
{(SMLM(k), SMLM(K))}
and transforming image pairs

745

training data set

Fig. 7

stochastic gradient descent

SMLM($k_i$)

ANN

300

ANNA-SMLM($k_i$)

$\left\|\ SK_i\ -\ Ak_i\ \right\|$  L1

$Sk_i$ / $Ak_i$

$Sk_i$ / $SK_i$

800

805

SMLM($K_i$)

# Fig. 8

805

(SPARSE SMLM & ANNA SMLM) or (SPARSE SMLM & DENSE SMLM)

Conv(2, 64, 4, 2) → LReLU

Conv(64, 128, 4, 2) → BN → LReLU

Conv(128, 256, 4, 2) → BN → LReLU

Conv(256, 512, 4, 2) → BN → LReLU

Conv(512, 1, 4, 2)

(DENSE SMLM / ANNA SMLM)

# Fig. 9

Fig. 10a

Fig. 10b

Fig. 11a

Fig. 11b

Fig. 12a

Fig. 12b

Fig. 13a

Fig. 13b

Fig. 14a

Fig. 14b

Fig. 15

Fig. 16

Fig. 17

Fig. 18

Europäisches
Patentamt

European
Patent Office

Office européen
des brevets

## EUROPEAN SEARCH REPORT

Application Number

EP 17 30 6022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANTHONY BARSIC ET AL: "Three-dimensional super-resolution and localization of dense clusters of single molecules", SCIENTIFIC REPORTS, vol. 4, no. 1, 23 June 2014 (2014-06-23), XP055438421, DOI: 10.1038/srep05388 * page 3, right-hand column, line 26 - page 5, left-hand column, line 20; figure 5 * | 1-17 | INV. G06T3/40 |
| Y | VIJAY BADRINARAYANAN ET AL: "SegNet: A Deep Convolutional Encoder-Decoder Architecture for Image Segmentation", IEEE TRANSACTIONS ON PATTERN ANALYSIS AND MACHINE INTELLIGENCE, vol. 39, no. 12, 10 October 2016 (2016-10-10), pages 2481-2495, XP055438349, USA ISSN: 0162-8828, DOI: 10.1109/TPAMI.2016.2644615 * section 3; figure 2 * | 1-17 | |
| A | EUGENIO F. FORNASIERO ET AL: "Super-resolution imaging for cell biologists : Concepts, applications, current challenges and developments", BIOESSAYS, vol. 37, no. 4, 1 April 2015 (2015-04-01), pages 436-451, XP055437863, GB ISSN: 0265-9247, DOI: 10.1002/bies.201400170 * the whole document * | 1-17 | TECHNICAL FIELDS SEARCHED (IPC) G06T |

-/--

The present search report has been drawn up for all claims

| Place of search | Date of completion of the search | Examiner |
|---|---|---|
| Munich | 5 January 2018 | Blaszczyk, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 17 30 6022

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEFAN W HELL ET AL: "The 2015 super-resolution microscopy roadmap", JOURNAL OF PHYSICS D: APPLIED PHYSICS, INSTITUTE OF PHYSICS PUBLISHING LTD, GB, vol. 48, no. 44, 15 October 2015 (2015-10-15), page 443001, XP020290395, ISSN: 0022-3727, DOI: 10.1088/0022-3727/48/44/443001 [retrieved on 2015-10-15] * the whole document * | 1-17 | |

TECHNICAL FIELDS
SEARCHED      (IPC)

The present search report has been drawn up for all claims

| Place of search | Date of completion of the search | Examiner |
|---|---|---|
| Munich | 5 January 2018 | Blaszczyk, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BETZIG, E. et al.** Imaging intracellular fluorescent proteins at nanometer resolution. *Science,* 2006, vol. 313 (80), 1642-1645
- **RUST, M. J. ; BATES, M. ; ZHUANG, X.** Sub-diffraction-limit imaging by stochastic optical reconstruction microscopy (STORM). *Nat Methods,* 2006, vol. 3, 793-795
- U-net: Convolutional networks for biomedical image segmentation. **RONNEBERGER, O. ; FISCHER, P. ; BROX, T.** Medical Image Computing and Computer-Assisted Intervention - MICCAI 2015. Lecture Notes in Computer Science. Springer International Publishing, 2015, vol. 9351, 234-241
- **GOODFELLOW, I. et al.** *Generative Adversarial Nets,* 2014, 2672-2680
- **ISOLA, P. ; ZHU, J.-Y. ; ZHOU, T. ; EFROS, A. A.** *Image-to-Image Translation with Conditional Adversarial Networks,* 2016